# EUROPÄISCHE PATENTSCHRIFT

(11) **EP 3 034 287 B1**
(45) Veröffentlichungstag und Bekanntmachung des Hinweises auf die Patenterteilung: **15.11.2017**
(21) Anmeldenummer: 15184384.4
(22) Anmeldetag: 09.09.2015
(51) Int. Cl.: B29D 30/48, B29D 30/00

(54) **VORRICHTUNG ZUR FERTIGUNG VON KERNPAKETEN FÜR FAHRZEUGLUFTREIFEN**
DEVICE FOR THE PRODUCTION OF CORE ASSEMBLIES FOR VEHICLE TYRES
DISPOSITIF DE PRODUCTION DE PAQUETS DE NOYAUX POUR PNEUMATIQUES DE VEHICULE

(30) Priorität: 17.12.2014 DE 102014226174
(43) Veröffentlichungstag der Anmeldung: 22.06.2016
(73) Patentinhaber: Continental Reifen Deutschland GmbH, 30165 Hannover (DE)
(72) Erfinder: Koch, Tim, 30171 Hannover (DE); Berger, Markus, 31319 Sehnde (DE); Wegner, Denis, 30419 Hannover (DE)
(74) Vertreter: Widjaja, Wira

(56) Entgegenhaltungen:
- EP-A1- 2 743 069
- US-A- 5 203 938
- US-A1- 2014 265 400

## Beschreibung

Die Erfindung betrifft eine Vorrichtung zur Fertigung von Kernpaketen aus einem Wulstkern und einem stehenden oder gekrümmten Apex für Fahrzeugluftreifen, mit oder ohne Separator, umfassend:
- eine drehbar gelagerte Platte,
- mindestens zwei auf der Platte angeordnete Bearbeitungsstationen, welche durch schrittweises Drehen der Platte zu unterschiedlichen Prozesseinheiten ausrichtbar sind,
- wobei jede Bearbeitungsstation eine Basisplatte und eine Greifeinrichtung zum Zentrieren des Wulstkerns und des Apex sowie gegebenenfalls des Separators aufweist,
- wobei an der Basisplatte ein Basisring fixierbar ist, wobei Basisringe unterschiedlicher Durchmesser fixierbar sind,
- wobei jede Bearbeitungsstation ein Greiferantriebssystem zur Betätigung der Greifeinrichtung aufweist.

Eine derartige Vorrichtung ist beispielsweise aus der EP 2 743 069 A1 bekannt. Die Greifeinrichtung zum Zentrieren weist Greifelemente mit einer gekrümmten Außenfläche auf, welche beim Zentriervorgang mit den Reifenbauteilen in Kontakt tritt.

Es ist bekannt und üblich, im Zuge der Reifenfertigung Kernpakete (Fertigkerne) bestehend aus Wulstkern und Apex (Kernreiter) herzustellen. Der Durchmesser der Wulstkerne sowie die Höhe und die Form der Apexe - stehende oder gekrümmte Apexe - sind vom zu fertigenden Reifentyp bzw. der Dimensionen des zu fertigenden Reifens abhängig. Die Apexhöhen betragen im Allgemeinen von 10 mm bis 100 mm. Je nach Reifentyp sind zur Fertigung der entsprechenden Kernpakete unterschiedliche Anlagentypen, welche den Apex voll- oder teilautomatisch auf dem Wulstkern applizieren, im Einsatz.

Unabhängig von der Höhe und der Form des Apex werden Kernpakete zur Lagerung und zum Transport durch Separatoren, deren Gestalt mit der Form des Apex korreliert, voneinander getrennt, sodass ein Aneinanderhaften der Kernpakete verhindert wird. Die Separatoren sind ringförmige Kunststoffteile, welche zur Trennung von stehenden Apexen in Form von flachen Ringen (Flachseparatoren) ausgeführt sind. Separatoren zur Trennung gekrümmter Apexe sind an jene Form angepasst, welche der Apex später im Karkassrohling annehmen soll. Bei der Fertigung von Kernpaketen mit stehendem Apex können die Flachseparatoren nach Herstellung der Kernpakete zwischen diesen eingebracht werden.

Bei gekrümmten Apexen oder Apexhöhen über 60 mm sind bislang keine Anlagentypen verfügbar, welche eine direkte Applikation des Apex aus einem Zubringer auf dem Wulstkern gestatten. Aus diesem Grund wird bei diesen Anlagentypen der Apex zuerst von einem Zubringer auf eine Trommel gewickelt, die mit klappbaren Segmenten oder einem aufblähbaren Balg ausgestattet ist. Anschließend wird durch ein Schwenken von Klappen oder durch ein Aufblähen des Balges der Apex auf dem Wulstkern appliziert. Zu diesen Anlagentypen gehören auch Anlagen, die zur Fertigung von Kernpaketen mit gekrümmten Apexen vorgesehen sind, wobei jeder einzelne Wulstkern und jeder Separator manuell in die Anlage eingelegt und wieder entnommen werden muss.

Bei gekrümmten Apexen ab einer Höhe von 60 mm erfüllt der Separator neben der Trennfunktion, wie oben erwähnt, eine zusätzliche Aufgabe, nämlich die Formgebung. Somit bringt ein Applizieren des Apex auf einem Separator den Vorteil mit sich, dass der Apex "vorgeformt" wird und beim späteren Verbau des Kernpaketes im Reifen geringere innere Spannungen auftreten. Aufgrund der "Vorformung" ist ein konzentrischer Sitz von Separator und Wulstkern während der Applikation und Lagerung von hoher Bedeutung. Darüber hinaus würden sich insbesondere hohe Apexe ohne Abstützung durch einen Separator an ihrer Spitze einrollen, da bei der Fertigkernproduktion mit Hilfe einer Trommel Zugspannungen im Apex entstehen, die mit steigender Apexhöhe ebenso ansteigen. Der Separator ist daher bei Fertigkernen mit gekrümmtem Apex zum Transport der Fertigkerne erforderlich, da die Fertigkerne allein zu instabil in ihrer Form sind.

Da sich die Separatorformen abhängig von der Apexhöhe stark unterscheiden, ist nach jetzigem Stand der Technik keine Anlage verfügbar, die sowohl gekrümmte als auch flache Separatoren (Flachseparatoren) und somit alle Apexhöhen und Formen auf einer Anlage automatisch verarbeiten kann. Folglich müssen bisher abhängig von der Apexhöhe zwei unterschiedliche Anlagentypen eingesetzt werden, um Fertigkerne mit Apexen einer Höhe kleiner 60 mm und gekrümmten Apexen einer Höhe größer oder gleich 60 mm zu fertigen. Dabei ist nur die erste Variante als Vollautomat verfügbar. Bisher war keine Anlage verfügbar, die eine vollautomatische Separator-Verarbeitung sowohl von gekrümmten Separatoren als auch von Flachseparatoren und eine vollautomatische Apex-Applikation mit Apexhöhen von 10 mm bis 100 mm auf einem Separator erlaubt.

Zur Fertigung von Kernpaketen mit stehenden Apexen mit einer Höhe von bis zu zirka 45 mm sind vollautomatisch arbeitende Anlagen bekannt, bei welchen der Apex aus einem Zubringer direkt auf den Wulstkern gewickelt wird. Bei gekrümmtem Apexen werden die Separatoren nach dem Applizieren unter das Kernpaket gelegt. Eine direkte Applikation auf den Separatoren ist mit solchen Anlagen nicht möglich.

Bislang steht somit keine Vorrichtung zur Verfügung, welche beide Separatorformen und Apexe mit den gängigen Höhen und Formen zu Kernpaketen vollautomatisch verarbeiten kann. Im Zuge der Verarbeitung ist es zudem insbesondere wichtig, Separator, Wulstkern und Apex konzentrisch zueinander auszurichten.

Der Erfindung liegt daher die Aufgabe zugrunde, eine Vorrichtung zur Fertigung von Kernpaketen unterschiedlicher Größen (bezüglich Durchmesser und Höhe) bestehend aus einem Wulstkern und einem gekrümmten oder stehenden Apex bis zu einer Höhe von 100 mm zur Verfügung zu stellen, wobei es möglich sein soll, Kernpakete mit gekrümmten Apexen mitsamt Separator aufzubauen.

Gelöst wird die gestellte Aufgabe erfindungsgemäß dadurch, dass jede Bearbeitungsstation ein Höhenverstellungssystem zur vertikalen Verstellung der Basisplatte gegenüber der Platte aufweist.

Die Vorrichtung gemäß der Erfindung ermöglicht mittels einer drehbar gelagerten Platte ein Anfahren sämtlicher für die Kernpaketfertigung erforderlichen Prozessstationen. Sind vorteilhafterweise mehr als zwei Bearbeitungsstationen vorhanden, können mehrere Verfahrensschritte parallel durchgeführt werden, sodass die Produktivität erhöht wird. Da die Abmessungen des Basisringes mit dem Durchmesser des zu fertigenden Kernpaketes korrelieren, können je nach Größe des aufgesetzten Basisringes Kernpakete verschiedener Durchmesser und Höhen produziert und insbesondere auch Wulstkerne verschiedener Zollgrößen verarbeitet werden. Die Verwendung von Basisringen ermöglicht das Auflegen, Zentrieren und Fixieren von Flachseparatoren und gekrümmten Separatoren auf dem Basisring vor dem Aufbringen des Wulstkerns. Vorteilhafterweise befindet sich die Greifeinrichtung innerhalb des Basisringes, was zweckmäßig ist, da sonst gekrümmte Apexe gegenüber einem auf ihnen aufgelegten Wulstkern nicht zentriert werden könnten. Außerdem sind die Innendurchmesserunterschiede zwischen Wulstkern und Separator im Allgemeinen geringer als deren Außendurchmesserunterschiede, sodass die erfindungsgemäß angeordnete Greifeinrichtung eine besonders genaue Zentrierung von Wulstkern und Separator zueinander ermöglicht. Das Höhenverstellungssystem ermöglicht die Verarbeitung von Wulstkernen unterschiedlicher Höhen und Separatoren unterschiedlicher Innenbundhöhen.

Bei einer bevorzugten Ausführungsform der Erfindung sind mindestens fünf auf der Platte angeordnete und zueinander baugleich ausgeführte Bearbeitungsstationen vorgesehen. Dabei ist es besonders zweckmäßig, die vorgesehene Anzahl der Bearbeitungsstationen an die Anzahl der Verfahrensschritte bzw. Prozesseinheiten anzupassen. Eine größere Anzahl von Bearbeitungsstationen erhöht zudem die Produktivität der Anlage und gestattet es, verschiedene Verfahrensschritte parallel durchführen zu können.

Zur korrekten und optimalen Ausrichtung der Bearbeitungsstationen zu den einzelnen Prozesseinheiten ist es besonders vorteilhaft, wenn die erfindungsgemäße Vorrichtung ein Feinpositioniersystem zum Fixieren der Platte in den Bearbeitungspositionen aufweist.

Dabei lässt sich die Platte gemäß einer weiteren Ausführung der Erfindung besonders exakt ausrichten, wenn das Feinpositioniersystem zumindest ein ein- und ausfahrbares Einrastelement aufweist.

Das jeder Bearbeitungsstation zugeordnete Greiferantriebssystem kann vorteilhafterweise, je nach Verfügbarkeit von Platz, an der Unter- oder der Oberseite der Platte positioniert werden.

Um die einzelnen Kernpaket-Bestandteile besonders exakt positionieren zu können, weist die an jeder Bearbeitungsstation vorgesehene Greifeinrichtung zumindest drei innerhalb des Basisringes angeordnete Greiffinger auf, welche mittels des Greiferantriebssystems aufeinander zu und voneinander weg bewegbar sind.

Um gegebenenfalls unterschiedliche Innendurchmesser von Wulstkern und Separator automatisch ausgleichen zu können, ist es vorteilhaft, wenn jeder Greiffinger ein federndes Element, beispielsweise eine Fingerhülse, und einen innerhalb des federnden Elementes befindlichen, an das Greiferantriebssystem gekoppelten Fingerkern aufweist. Dabei weist der Fingerkern vorzugsweise einen in vertikaler Richtung aus dem federnden Element herausragenden Kernkopf auf, dessen Durchmesser gegenüber dem Durchmesser des übrigen Fingerkerns größer ist.

Zur optimalen Zentrierung des Wulstkerns gegenüber dem Apex und gegebenenfalls gegenüber dem vorgesehenen Separator ist es vorteilhaft, wenn gemäß einer bevorzugten Ausführungsform der Erfindung das Greiferantriebssystem sämtliche Greiffinger einer Bearbeitungsstation gleichzeitig bzw. synchron betätigt. Um das Greiferantriebssystem ohne direkte Zuführung elektrischer Energie betätigen zu können, sodass die Platte, auf welcher sich die Bearbeitungsstationen befinden, ungehindert schrittweise gedreht werden kann, sind gemäß bevorzugter Ausführungsformen besondere Maßnahmen getroffen. Zu diesen gehören, dass das Greiferantriebssystem an ein mechanisch arbeitendes, federndes Rückstellelement gekoppelt ist, ferner, dass vorzugsweise die Greiffinger einer Bearbeitungsstation mittels eines zum Greiferantriebssystem gehörenden Antriebes, welcher beispielsweise eine Zahnrad-Riemen-Anordnung, eine Zahnrad-Zahnstangen-Anordnung oder dergleichen aufweist, synchron verstellbar sind. In diesem Zusammenhang ist es auch vorteilhaft, wenn eine mit dem Greiferantriebssystem nicht gekoppelte Vorrichtung, beispielsweise ein pneumatisch betätigbarer Zylinder, den zum Greiferantriebssystem gehörenden Antrieb betätigt.

Für das Höhenverstellungssystem ist es besonders vorteilhaft, wenn dieses einen weiteren Antrieb aufweist, beispielsweise eine Zahnrad-Riemen-Anordnung, wobei der weitere Antrieb mittels einen Elektromotors betätigbar und mit der Basisplatte gekoppelt ist.

Weitere Merkmale, Vorteile und Einzelheiten der Erfindung werden nun anhand der Zeichnung, in der eine Ausführungsform der Erfindung dargestellt ist, näher erläutert.

Dabei zeigen
Fig. 1 eine Ansicht einer Ausführungsform einer Vorrichtung zur Fertigung von Kernpaketen gemäß der Erfindung,
Fig. 2 eine Ansicht auf die Unterseite der Vorrichtung aus Fig. 1,
Fig. 3 eine vergrößerte, detaillierte Ansicht eines Feinpositioniersystems,
Fig. 4 eine detaillierte Ansicht einer Bearbeitungsstation,
Fig. 5 die Bearbeitungsstation aus Fig. 4 mit Bestandteilen eines Höhenverstellungssystems - eines Antriebssystems zur Höhenverstellung einer Basisplatte -,
Fig. 6a eine detaillierte Schrägansicht eines an der Unterseite der Vorrichtung befestigten Greiferantriebssystemes,
Fig. 6b das Greiferantriebssystem aus Fig. 6a in Draufsicht und
Fig. 7 einen Querschnitt eines Greiffingers.

Die Erfindung befasst sich mit einer vollautomatisch arbeitenden Vorrichtung zur Fertigung von Kernpaketen für Fahrzeugluftreifen. Die Kernpakete bestehen jeweils aus einem aus Stahlseilen oder Stahldrähten und Kautschuk aufgebauten Wulstkern und einem Apex (Kernprofil) aus zumindest einer Kautschukmischung. Die erfindungsgemäße Vorrichtung gestattet die Verarbeitung stehender und gekrümmter Apexe mit einer Höhe von 10,0 mm bis 100,0 mm.

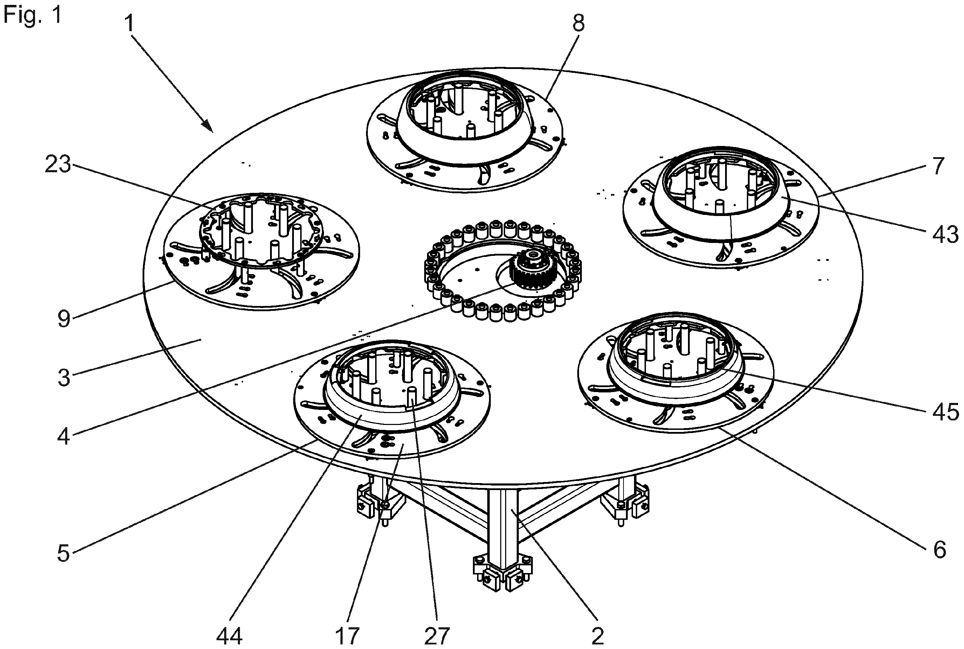

Fig. 1 zeigt ein Positioniersystem 1 umfassend eine am Untergrund fixierte Halterung 2, eine auf dieser montierte Platte 3, einen Elektromotor 4 sowie fünf auf der Platte 3 positionierte sowie zueinander baugleiche Bearbeitungsstationen 5 bis 9.

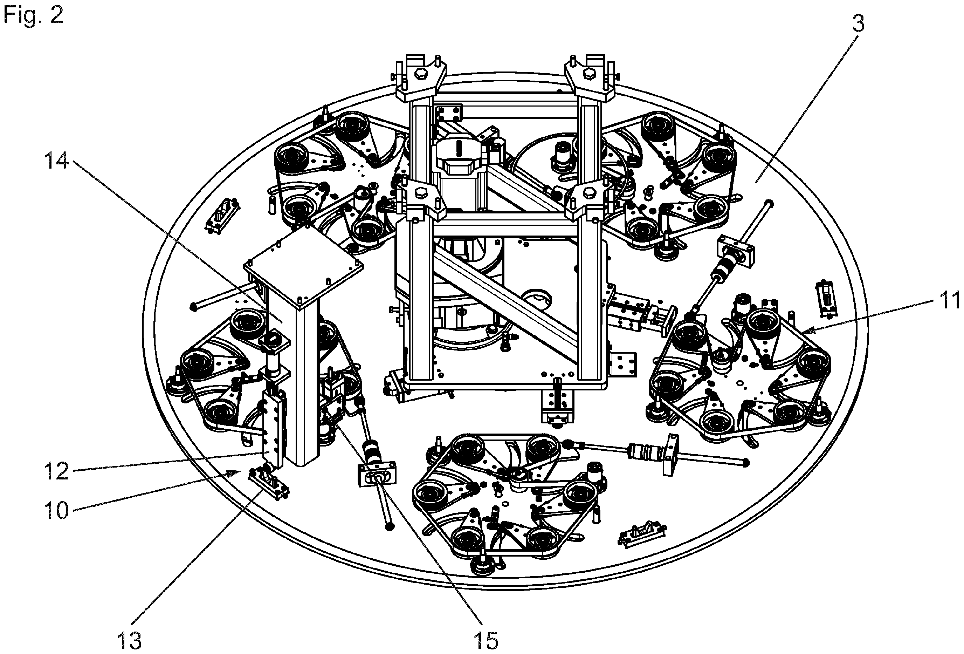

Das gezeigte Positioniersystem 1 ist exemplarisch in Form eines Rundtakttisches ausgeführt. Die Bearbeitungsstationen 5 bis 9 sind auf der Platte 3 im Kreis angeordnet, sodass jede Bearbeitungsstation 5 bis 9 zu den ihr benachbarten Bearbeitungsstationen im Wesentlichen übereinstimmende Abstände aufweist. Die Platte 3 ist auf der Halterung 2 drehbar gelagert und kann, insbesondere in an sich bekannter Weise, mittels des Elektromotors 4 in eine Drehbewegung versetzt werden, welche bei der gezeigten Ausführungsform gegen den Uhrzeigersinn verläuft. Die Platte 3 wird durch ein Ein- und Ausschalten des Elektromotors 4 schrittweise jeweils um zirka 72° gedreht, wobei die Platte 3 nach jeder Drehbewegung über ein unterhalb der Platte 3 positioniertes Feinpositioniersystem 10 (Fig. 2) exakt ausgerichtet wird. Nach erfolgter Drehbewegung sind die Bearbeitungsstationen 5 bis 9 gegenüber stationären Prozesseinheiten (in Fig. 1 nicht gezeigt) ausgerichtet. Mittels der Prozesseinheiten wird an jeder Bearbeitungsstation 5 bis 9 ein Verfahrensschritt zur Fertigung eines Kernpaketes durchgeführt. Dementsprechend befinden sich die gezeigten Bearbeitungsstationen 5 bis 9 während des Betriebes der Vorrichtung in aufeinanderfolgenden Verfahrensstadien. Die Platte 3 kann ferner mittels anderer Antriebe, beispielsweise einem pneumatischem Antrieb, einem Abtrieb mit einem Kurvengetriebe oder dergleichen, bewegt werden.

Entsprechend Fig. 2 besitzt jede Bearbeitungsstation 5 bis 9 ein vorzugsweise an der Unterseite der Platte 3 befestigtes Greiferantriebssystem 11. Alternativ kann das Greiferantriebssystem 11 an der Oberseite der Platte 3 befestigt sein. Das Feinpositioniersystem 10 setzt sich aus einem Riegelelement 12 und fünf an der Unterseite der Platte 3 befestigten Rastelementen 13 zusammen. Die fünf Rastelemente 13 sind gleichmäßig entlang eines Kreises auf der Platte 3 montiert, sodass jedes Rastelement 13 zu seinen beiden benachbarten Rastelementen 13 im Wesentlichen gleiche Abstände aufweist. Das Riegelelement 12 ist an einem am Untergrund fixierten Gestell 14 montiert. Des Weiteren ist am Gestell 14 ein in horizontaler Richtung bewegbarer Elektromotor 15 befestigt.

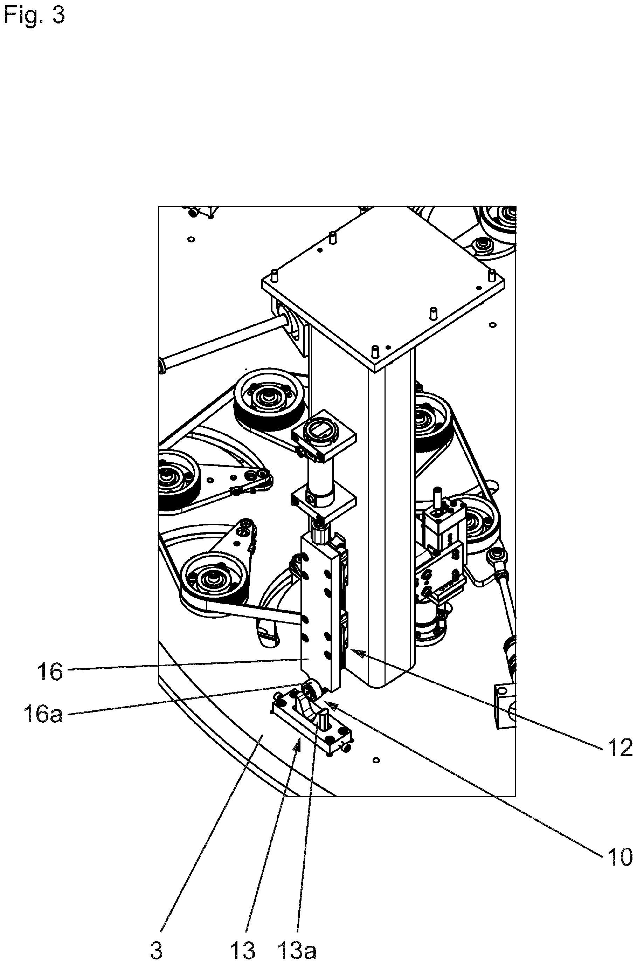

Gemäß der Detailansicht in Fig. 3 weist jedes Rastelement 13 beispielsweise eine eine U-förmige Aussparung aufweisende Raste 13a auf. Das Riegelelement 12 verfügt über ein in vertikaler Richtung ein- und ausfahrbares Einrastelement 16 mit einer im Wesentlichen zylindrischen Rolle 16a. Die Abmessungen der Rolle 16a korrespondieren mit den Abmessungen der U-förmigen Aussparung der Raste 13a. Wird die Platte 3 über den Elektromotor 4 in Drehbewegung versetzt, kann nach dem Stoppen des Elektromotors 4 die Platte 3 mittels des Feinpositioniersystems 10 exakt positioniert werden. Hierzu wird das Einrastelement 16 ausgefahren, sodass seine Rolle 16a in der Raste 13a einrastet und die Platte 3 in der für den nächsten Verfahrensschritt erforderlichen Position fixiert wird. Nach Durchführen des jeweiligen Verfahrensschrittes wird das Einrastelement 16 eingefahren und die Platte 3 über den Elektromotor 4 erneut in Drehung versetzt.

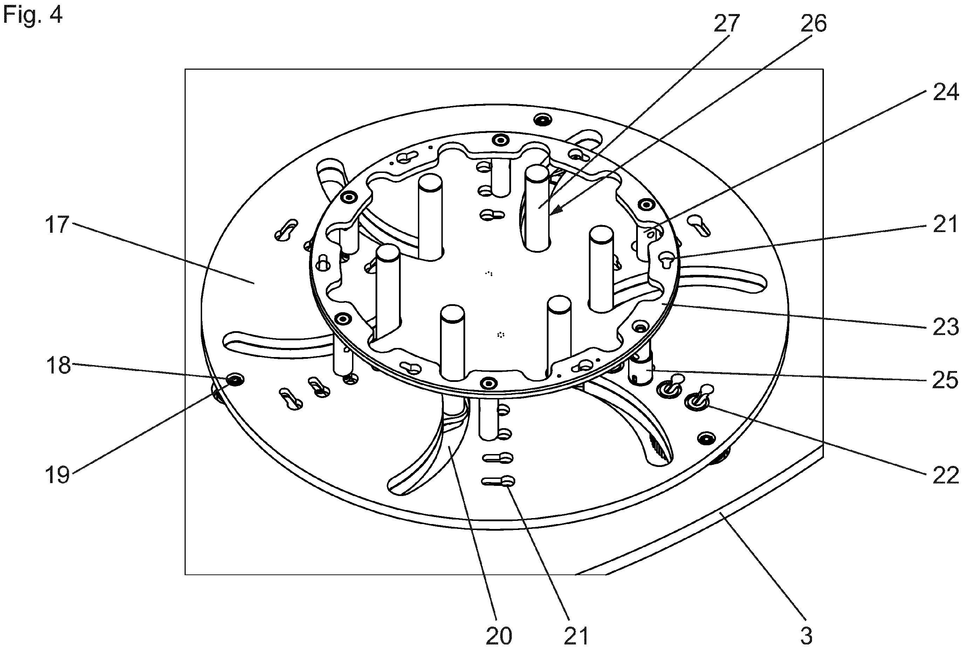

In Fig. 4 ist exemplarisch eine der Bearbeitungsstationen 5 bis 9 dargestellt. Jede Bearbeitungsstation 5 bis 9 weist eine beispielsweise kreisförmige Basisplatte 17 auf, welche insbesondere mittels dreier Gewindespindeln 18 an der Unterseite der Platte 3 montiert ist. Die Gewindespindeln 18 sind am Rand der Basisplatte 17 in im Wesentlichen gleichen Abständen zueinander angeordnet, wobei jede Gewindespindel 18 über eine Schraubenmutter 19 an der Basisplatte 17 fixiert ist. Sämtliche Gewindespindeln 18 sind Bestandteil eines Höhenverstellungssystems, welches es gestattet, die Basisplatte 17 in vertikaler Richtung gegenüber der Platte 3 zu bewegen.

In der Basisplatte 17 sind sechs Führungsbahnen 20 ausgebildet, welche, in Draufsicht, im Wesentlichen sternförmig zueinander angeordnete Aussparungen sind und jeweils vom Randbereich der Basisplatte 17 kreisbogenförmig zur Mitte der Basisplatte 17 verlaufen. Die Führungsbahnen 20 durchsetzen dabei sowohl die Basisplatte 17 als auch die Platte 3. Zwischen den Führungsbahnen 20 weist die Basisplatte 17 jeweils eine Reihe vier hintereinander konzentrisch angeordneter schlüssellochförmiger Aussparungen 21 auf, wobei sämtliche auf einem definierten Radius angeordnete Aussparungen 21 einen Schlüssellochsatz bilden. In einer dieser Reihen ist jede schlüssellochförmige Aussparung 21 mit je einer zusätzlichen ringförmigen Nut 22 versehen. Auf der Basisplatte 17 ist ein Basisring 23 mittels seiner fünf Füße 24 und seines Verriegelungsfußes 25 montiert. Die Zollgröße des Basisringes 23 korreliert dabei mit dem Durchmesser des zu fertigenden Kernpaketes, wobei pro Schlüssellochsatz Basisringe unterschiedlicher Zollgrößen eingesetzt werden können. Die fünf Füße 24 und der Verriegelungsfuß 25 sind in den mit den Abmessungen des jeweiligen Basisringes 23 korrespondierenden Aussparungen 21 platziert, wobei der Verriegelungsfuß 25 in der entsprechenden Aussparung 21 mit der zusätzlich ringförmigen Nut 22 positioniert ist. Durch Drehen des aufgesetzten Basisringes 23 werden die Füße 24 und der Verriegelungsfuß 25 in den Aussparungen 21 verankert. Der Verriegelungsfuß 25 fixiert den Basisring 23 gegenüber der Basisplatte 17. Der Basisring 23 weist ebenfalls schlüssellochförmige Aussparungen 21 auf, in welchen mittels eines Schnellverschlussmechanismus ein Adapterring montiert werden kann, dessen Verwendung, wie später noch detaillierter erläutert wird, bei Flachseparatoren zweckmäßig ist.

Jede Bearbeitungsstation 5 bis 9 verfügt des Weiteren über eine Greifeinrichtung 26 mit beispielsweise sechs insbesondere im Wesentlichen zylindrischen Greiffingern 27, welche jeweils über die unterhalb der Platte 3 montierten Greiferantriebssysteme 11 (Fig. 2) miteinander in Verbindung stehen.

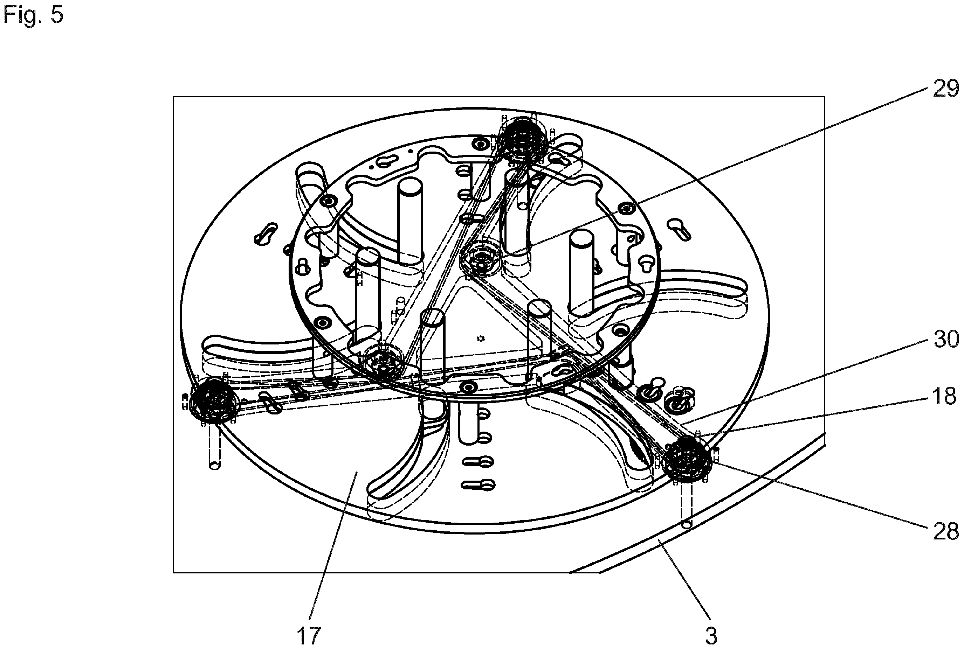

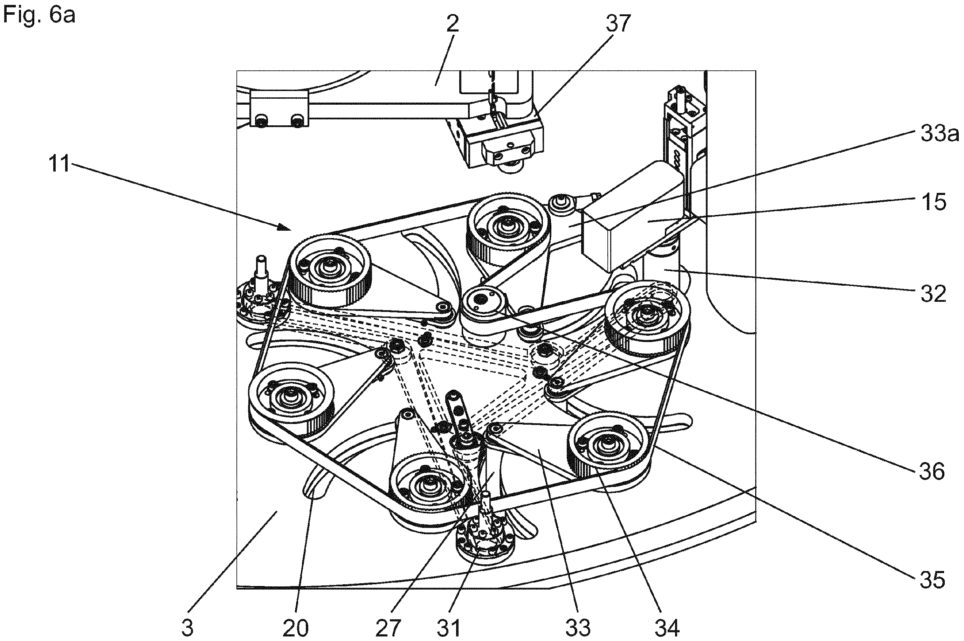

Fig. 5 zeigt eine zu Fig. 4 analoge Darstellung einer der Bearbeitungsstationen 5 bis 9, wobei zusätzlich ein in der Basisplatte 17 integrierter Teil ihres Höhenverstellungssystems erkennbar ist. Das Höhenverstellungssystem weist drei Zahnräder 28 sowie drei Spannrollen 29 auf, wobei sämtliche Zahnräder 28 und Spannrollen 29 über einen einzigen Riemen 30 miteinander verbunden und an der Unterseite der Platte 3 befestigt sind (Fig. 6a). Jedes Zahnrad 28 besitzt ein zentrisch angeordnetes Innengewinde, in welches je eine der Gewindespindeln 18 hineingedreht ist. Die Gewindespindeln 18 ragen durch die Basisplatte 17 sowie durch die Platte 3 hindurch. An der Unterseite der Platte 3 sind die Gewindespindeln 18 jeweils in eine ebenfalls mit einem Innengewinde ausgestatteten, an der Platte 3 befestigten Spindelmutter 31 eingeschraubt und befestigen derart das Höhenverstellungssystem an der Platte 3 (Fig. 6a).

Wie Fig. 6a zeigt, ist auf einer der Spindelmuttern 31 eine Motorkupplung 32 angeordnet. An diese kann der Elektromotor 15 an- und abgekoppelt werden, wobei in Fig. 6a der Elektromotor 15 bereits angekoppelt ist. Nach Ankopplung des Elektromotors 15 können sämtliche Zahnräder 28 über den Riemen 30 in Drehung versetzt werden, sodass die Basisplatte 17 gegenüber der Platte 3 in vertikaler Richtung in die gewünschte Position gebracht werden kann (Fig. 5).

Des Weiteren ist in Fig. 6a eine Detailansicht des Greiferantriebssystems 11, welches die Bewegung der Greifeinrichtung 26 (Fig. 4) ermöglicht, dargestellt. Die durch die Führungsbahnen 20 ragenden Greiffinger 27 sind jeweils an einer Schwenkbacke 33 befestigt. Auf jeder Schwenkbacke 33 ist ein Zahnrad 34 befestigt. Sämtliche Zahnräder 34 und damit die Schwenkbacken 33 eines Greiferantriebssystems 11 sind über einen weiteren Riemen 35 miteinander verbunden, wobei der Riemen 35 zusätzlich über eine Spannrolle 36 geführt wird. Anstelle des Riemens 35 können die Zahnräder 34 beispielsweise auch über Zahnstangen und der gleichen aneinander gekoppelt sein. Eine nahe der Halterung 2 positionierte Schwenkbacke 33 weist einen abgerundeten Fortsatz 33a auf, welcher in Richtung eines an der Halterung 2 angebrachten stationären pneumatischen Zylinders 37 weist. Der pneumatische Zylinder 37 kann in Richtung des Fortsatzes 33a ausgefahren werden.

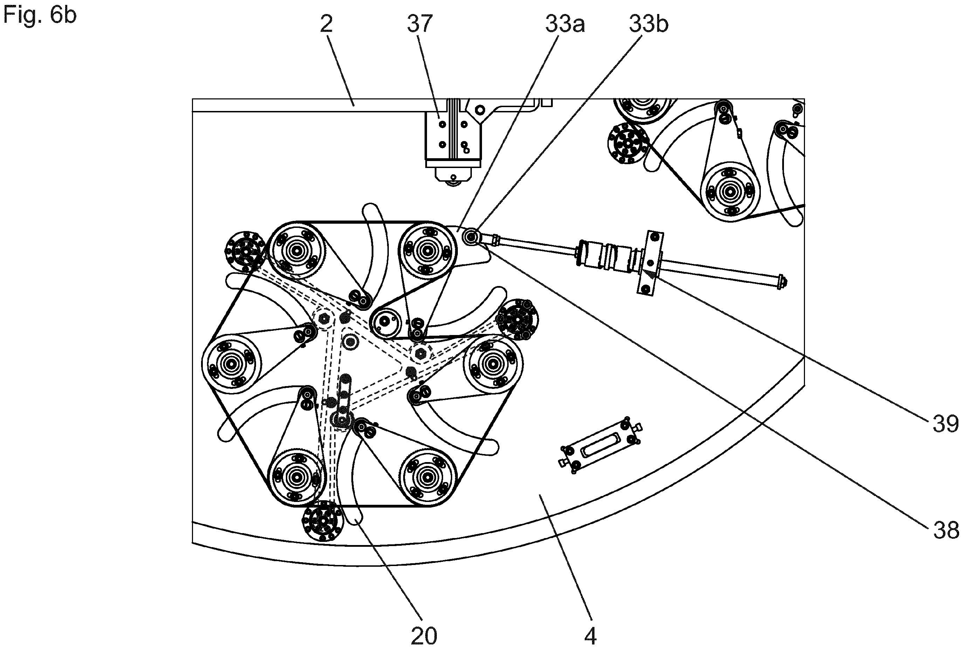

Wie Fig. 6b zeigt, ist am Fortsatz 33a ein Metallstift 33b befestigt. Der Metallstift 33b ist von einem Gelenkkopf 38 umgeben, welcher an einem mit einer Feder arbeitenden Rückstellelement 39 montiert ist. Das Rückstellelement 39 selbst ist an der Platte 3 befestigt. Wird der pneumatische Zylinder 37 ausgefahren drückt dieser auf den Fortsatz 33a, wodurch sämtliche Greiffinger 27 entlang der Führungsbahnen 20 nach innen fahren, wobei gleichzeitig das Rückstellelement 39 komprimiert und somit gespannt wird. Wird der pneumatische Zylinder 37 wieder entlastet, entspannt sich das Rückstellelement 39 und drückt somit die Greiffinger 27 in den Führungsbahnen 20 wieder nach außen. Anstelle des Rückstellelementes 39 und des pneumatischen Zylinders 37 kann bei einer weiteren Ausführungsvariante der Erfindung das Greiferantriebssystem 11 mittels einer Drehdurchführung betrieben werden.

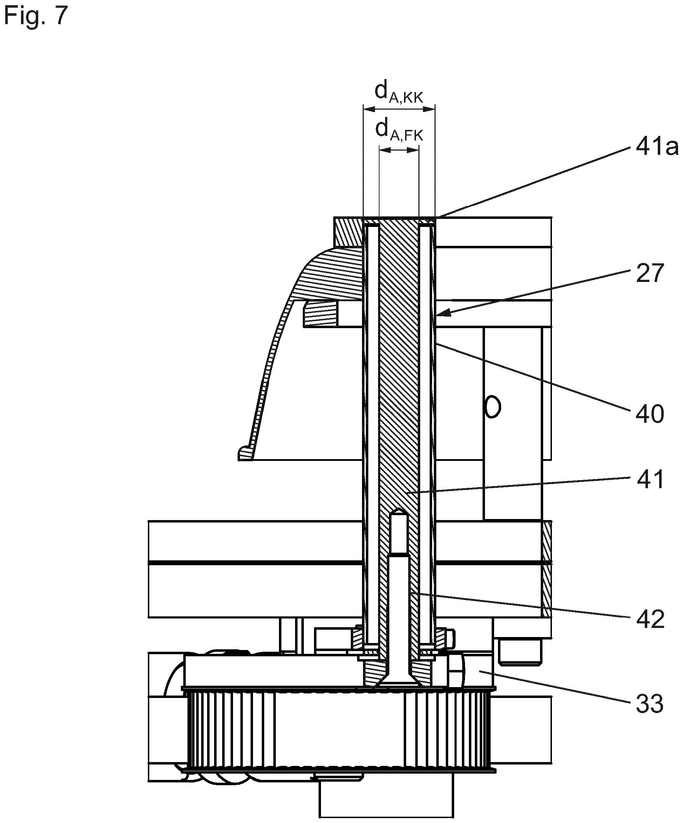

In Fig. 7 ist eine Detailansicht eines Greiffingers 27 dargestellt. Jeder Greiffinger 27 weist eine federnde Fingerhülse 40 und einen im Wesentlichen in der Fingerhülse 40 verlaufenden Fingerkern 41 auf. Jede Fingerhülse 40 ist auf einer Schwenkbacke 33 derart befestigt, dass sie in horizontaler Richtung um einige Millimeter ausgelenkt werden kann. Alternativ kann die Fingerhülse 40 aus einem Federblech gefertigt sein. Der Fingerkern 41 ist über eine Schraube 42 starr mit der Schwenkbacke 33 und damit direkt mit dem Greiferantriebssystem 11 verbunden und besitzt im Bereich innerhalb der Fingerhülse 40 einen Durchmesser d_{A,FK}. In vertikaler Richtung ragt der Fingerkern 41 ein Stück aus der Fingerhülse 40 heraus und weist dort einen pilzartigen Kernkopf 41a auf, dessen Durchmesser d_{A,KK} > d_{A,FK} im Wesentlichen mit dem Außendurchmesser der Fingerhülse 40 übereinstimmt. Wird ein Weiterbewegen eines Greiffingers 27 durch ein an der Fingerhülse 40 anstehendes Objekt verhindert, wird, unter der Voraussetzung, dass die Greifkraft eines Greiffingers 27 die zur Auslenkung des Fingerkerns 41 gegenüber der federnden Fingerhülse 40 notwendige Auslenkungskraft übersteigt, der Fingerkern 41 derart ausgelenkt, dass sein pilzartiger Kernkopf 41a den Rand der Fingerhülse 40 überragt.

Nachfolgend werden anhand der Fig. 1 die Verfahrens schritte zur Fertigung eines Kernpaketes mit der erfindungsgemäßen Vorrichtung erläutert, wobei beispielhaft ein gekrümmter Apex 43 mittels eines aus Kunststoff bestehenden gekrümmten Separators 44 verarbeitet wird. An sämtlichen Bearbeitungsstationen 5 bis 9 sind die Basisringe 23 bereits angebracht. Die gezeigten Bearbeitungsstationen 5 bis 9 befinden sich in aufeinanderfolgenden Verfahrensstadien und werden durch Drehen zur nächsten Prozesseinheit gebracht, an welcher der nächste Verfahrensschritt durchgeführt wird. Die Bauteile werden über nicht gezeigte Zubringer oder Transportsysteme am Positioniersystem 1 bereitgestellt.

Im ersten Schritt (Bearbeitungsstation 5) fahren die Greiffinger 27 zusammen und es wird der Separator 44 am Basisring 23 aufgelegt, wobei der Separator 44 die Basisplatte 17 nicht berührt. Anschließend werden die Greiffinger 27 wieder auseinandergefahren, sodass der Separator 44 gegenüber dem Basisring 23 fixiert und zentriert wird.

Nach Zusammenfahren der Greiffinger 27 wird nach Drehen der Platte 3 zur nächsten Prozesseinheit ein Wulstkern 45 auf den Separator 44 aufgelegt (Bearbeitungsstation 6). Die Greiffinger 27 fahren auseinander, wodurch sowohl der Wulstkern 45 als auch der Separator 44 fixiert und zentriert werden.

An der nachfolgenden Prozesseinheit (Bearbeitungsstation 7) wird über eine Applikationseinheit der Apex 43 aufgelegt, wobei die Greiffinger 27 nicht gelöst werden, um die Zentrierung des Wulstkerns 45 und des Separators 44 aufrechtzuerhalten.

Nach erneutem Drehen der Platte 3 zur nächsten Prozesseinheit (Bearbeitungsstation 8) fahren nicht gezeigte Andrückrollen von oben an den Wulstkern 45 heran und anschließend diesen entlang, wodurch der Wulstkern 45 und der Apex 43 gegeneinander verfestigt werden, sodass ein Kernpaket entsteht. An der letzten Prozesseinheit fahren die Greiffinger 27 zusammen und das Kernpaket wird über eine nicht gezeigte Transporteinheit von der Bearbeitungsstation genommen (Bearbeitungsstation 9).

Die erfindungsgemäße Vorrichtung ermöglicht es, Wulstkerne verschiedener Zollgrößen durch Tauschen des Basisringes 23 zu verarbeiten, da die Greiffinger 27 der Greifeinrichtung 26 entsprechend den Basisringabmessungen auseinander fahren. Dabei kann eine Höhenanpassung der Basisplatten 17 erforderlich sein, um die Position des Basisringes 23 an geänderte Wulstkernhöhen und/oder geänderte Separatorinnenbundhöhen anzupassen. Diese Anpassung kann automatisch mittels des Elektromotors 15 erfolgen. Um eine gute Zentrierung von Separator 44, Wulstkern 45 und Apex 43 zu erzielen, ist es zweckmäßig, die Greifeinrichtung 26 mit mindestens drei Greiffingern 27 auszustatten. Es ist jedoch von Vorteil, wenn die Greifeinrichtung 26 zumindest sechs Greiffinger 27 aufweist, da dadurch die Greifkraft der Greifeinrichtung 26 gleichmäßiger über den Wulstkern 45 und den Separator 44 verteilt wird, sodass eine etwaige Verformung von Wulstkern 45 und Separator 44 durch die Greiffinger 27 gering gehalten wird.

Häufig weisen Wulstkerne und Separatoren gleicher Zollgrößen voneinander abweichende Innendurchmesser auf. Dabei fallen die Innendurchmesser der Wulstkerne im Allgemeinen etwas größer als der Innendurchmesser der Separatoren aus. Die Zentrierung derartiger Wulstkerne und Separatoren wird durch die obig beschriebenen speziell konstruierten Greiffinger 27 bestehend aus federnder Fingerhülse 40 und Fingerkern 41 ermöglicht. Fahren die Greiffinger 27 auseinander, treffen deren federnde Fingerhülsen 40 auf den Separator 44, wobei die Kernköpfe 41a noch nicht mit dem Wulstkern 45 in Kontakt stehen. Die Fingerkerne 41 werden weiter nach außen bewegt, wobei sie gleichzeitig gegenüber den am Separator 44 anstehenden Fingerhülsen 40 in horizontaler Richtung ausgelenkt werden, sodass die Kernköpfe 41a der Fingerkerne 41 über die Ränder der Fingerhülsen 40 hinausfahren bis diese mit dem Wulstkern 45 in Kontakt treten, sodass sowohl der Separator 44 als auch der Wulstkern 45 gegenüber dem Basisring 23 fixiert und zentriert werden kann. Mit der erfindungsgemäßen Vorrichtung können Wulstkerne und Separatoren, deren Innendurchmesser bis zu einem Wert von d_{A,KK} - d_{A,FK} voneinander abweichen, zueinander zentriert werden, da diese Differenz der beidseitigen maximalen Auslenkung der Kernköpfe 41a gegenüber der am Separator 44 anstehenden Fingerhülsen 40 entspricht.

Zur Verarbeitung von gekrümmten Separatoren 44 unterschiedlicher Innenbundhöhen mit Wulstkernen 45 unterschiedlicher Höhen, wird die Höhe der Basisplatte17 und damit des Basisrings 23 derart eingestellt, dass der auf dem Separator 44 aufliegende Wulstkern 45 mit den Kernköpfen 41a der Fingerkerne 41 in vertikaler Richtung bündig abschließt, sodass eine Zentrierung von Separator 44 und Wulstkern 45 über die Kernköpfe 41a und die auslenkbare federnde Fingerhülse 42 gewährleistet ist. In analoger Weise können mit der erfindungsgemäßen Vorrichtung auch stehende Apexe mit Flachseparatoren verarbeitet werden.

Häufig müssen Flachseparatoren, deren Innendurchmesser wesentlich kleiner als jener der Wulstkerne ist, verarbeitet werden. Bei solchen Flachseparatoren handelt es sich insbesondere um Multirange-Separatoren, welche zwei oder mehr als zwei Wulstkernzollgrößen verarbeiten können. In diesem Fall kann die Greifeinrichtung 26 den Wulstkern und den Flachseparator nicht ohne weiteres zueinander zentrieren, da selbst bei gegenüber der Fingerhülse 40 maximal ausgelenkten Fingerkernen 41 die Kernköpfe 41a den Wulstkern nicht erreichen. In diesem Fall übersteigt der Unterschied im Innendurchmesser zwischen Wulstkern und Flachseparator die maximale Auslenkung der Kernköpfe 41a der Fingerkerne 41 gegenüber der Fingerhülse 40. Das Positioniersystem 1 ist jedoch in der Lage, Kernpakete ohne Separatoren zu fertigen, sodass Flachseparatoren auch erst nach Ablage der Kernpakete am Lagerort zwischen die Kernpakete eingebracht werden können und ein Aneinanderhaften der Kernpakete verhindert wird. Hierfür ist es zweckmäßig, auf den Basisring 23 einen Adapterring mittels eines Schnellverschlussmechanismus zu montieren. Der Adapterring ist mit einer Antihaftbeschichtung überzogen und verhindert derart eine etwaige Beschädigung des Apex durch ein Ankleben am Basisring 23. Der größere Außendurchmesser des Adapterringes gegenüber dem Basisring 23 vergrößert die Auflagefläche für den Apex und stützt den Apex somit ab.

Eine entsprechend programmierte Steuerung kann die vollautomatische Fertigung sicherstellen, sodass seitens des Bedienpersonals lediglich die Höhe und der Durchmesser der Bestandteile des zu fertigenden Kernpaketes ausgewählt werden. Anstelle pneumatischer Komponenten können auch hydraulisch oder elektrisch arbeitende Komponenten vorgesehen sein. Die erforderliche Hard- und Software sind nicht Gegenstand der Erfindung.

### Bezugsziffernliste

- 1: Positioniersystem
- 2: Halterung
- 3: Platte
- 4: Elektromotor
- 5: Bearbeitungsstation
- 6: Bearbeitungsstation
- 7: Bearbeitungsstation
- 8: Bearbeitungsstation
- 9: Bearbeitungsstation
- 10: Feinpositioniersystem
- 11: Greiferantriebssystem
- 12: Riegelelement
- 13: Rastelement
- 13a: Raste
- 14: Gestell
- 15: Elektromotor
- 16: Einrastelement
- 16a: Rolle
- 17: Basisplatte
- 18: Gewindespindel
- 19: Schraubenmutter
- 20: Führungsbahn
- 21: Aussparung
- 22: ringförmige Nut
- 23: Basisring
- 24: Fuß
- 25: Verriegelungsfuß
- 26: Greifeinrichtung
- 27: Greiffinger
- 28: Zahnrad
- 29: Spannrolle
- 30: Riemen
- 31: Spindelmutter
- 32: Motorkupplung
- 33: Schwenkbacke
- 33a: Fortsatz
- 33b: Metallstift
- 34: Zahnrad
- 35: Riemen
- 36: Spannrolle
- 37: pneumatischer Zylinder
- 38: Gelenkkopf
- 39: Rückstellelement
- 40: Fingerhülse
- 41: Fingerkern
- 41a: Kernkopf
- 42: Schraube
- 43: Apex
- 44: Separator
- 45: Wulstkern

## Patentansprüche

1. Vorrichtung zur Fertigung von Kernpaketen aus einem Wulstkern (45) und einem stehenden oder gekrümmten Apex (43) für Fahrzeugluftreifen, mit oder ohne Separator (44), umfassend:
- eine drehbar gelagerte Platte (3),
- mindestens zwei auf der Platte (3) angeordnete Bearbeitungsstationen (5, 6, 7, 8, 9), welche durch schrittweises Drehen der Platte (3) zu unterschiedlichen Prozesseinheiten ausrichtbar sind,
- wobei jede Bearbeitungsstation (5, 6, 7, 8, 9) eine Basisplatte (17) und eine Greifeinrichtung (26) zum Zentrieren des Wulstkerns (45) und des Apex (43) sowie gegebenenfalls des Separators (44) aufweist,
- wobei an der Basisplatte (17) ein Basisring (23) fixierbar ist, wobei Basisringe (23) unterschiedlicher Durchmesser fixierbar sind,
- wobei jede Bearbeitungsstation (5, 6, 7, 8, 9) ein Greiferantriebssystem (11) zur Betätigung der Greifeinrichtung (26) aufweist,
**dadurch gekennzeichnet,**
- **dass** jede Bearbeitungsstation (5, 6, 7, 8, 9) ein Höhenverstellungssystem zur vertikalen Verstellung der Basisplatte (17) gegenüber der Platte (3) aufweist.

2. Vorrichtung nach Anspruch 1, **dadurch gekennzeichnet, dass** mindestens fünf auf der Platte (3) angeordnete zueinander baugleiche Bearbeitungsstationen (5, 6, 7, 8, 9) vorgesehen sind.

3. Vorrichtung nach Anspruch 1 oder 2, **dadurch gekennzeichnet, dass** sie ein Feinpositioniersystem (10) zum Fixieren der Platte (3) in den Bearbeitungspositionen aufweist.

4. Vorrichtung nach Anspruch 3, **dadurch gekennzeichnet, dass** das Feinpositioniersystem (10) zumindest ein ein- und ausfahrbares Einrastelement (16) aufweist.

5. Vorrichtung nach einem der Ansprüche 1 bis 4, **dadurch gekennzeichnet, dass** das jeder Bearbeitungsstation (5, 6, 7, 8, 9) zugeordnete Greiferantriebssystem (11) an der Unter- oder der Oberseite der Platte (3) positioniert ist.

6. Vorrichtung nach einem der Ansprüche 1 bis 5, **dadurch gekennzeichnet, dass** die an jeder Bearbeitungsstation (5, 6, 7, 8, 9) vorgesehene Greifeinrichtung (26) mindestens drei innerhalb der Basisringes (23) angeordnete Greiffinger (27) aufweist, welche mittels des Greiferantriebssystemes (11) aufeinander zu und voneinander weg bewegbar sind.

7. Vorrichtung nach Anspruch 6, **dadurch gekennzeichnet, dass** jeder Greiffinger (27) ein federndes Element, beispielsweise eine Fingerhülse (40), und einen innerhalb des federnden Elementes befindlichen, an das Greiferantriebssystem (11) gekoppelten Fingerkern (41) aufweist.

8. Vorrichtung nach Anspruch 7, **dadurch gekennzeichnet, dass** der Fingerkern (41) einen in vertikaler Richtung aus dem federnden Element herausragenden Kernkopf (41a), dessen Durchmesser (d_{A,KK}) gegenüber dem Durchmesser (d_{A,FK}) des übrigen Fingerkerns (41) größer ist, aufweist.

9. Vorrichtung nach einem der Ansprüche 1 bis 8, **dadurch gekennzeichnet, dass** das Greiferantriebssystem (11) sämtliche Greiffinger (27) einer Bearbeitungsstation (5, 6, 7, 8, 9) gleichzeitig betätigt.

10. Vorrichtung nach einem der Ansprüche 1 bis 9, **dadurch gekennzeichnet, dass** das Greiferantriebssystem (11) an ein mechanisch arbeitendes federndes Rückstellelement (39) gekoppelt ist.

11. Vorrichtung nach einem der Ansprüche 1 bis 10, **dadurch gekennzeichnet, dass** die Greiffinger (27) einer Bearbeitungsstation (5, 6, 7, 8, 9) mittels eines zum Greiferantriebssystem (11) gehörenden Antriebes, welcher beispielsweise eine Zahnrad-Riemen-Anordnung, eine Zahnrad-Zahnstangen-Anordnung oder dergleichen aufweist, synchron verstellbar sind.

12. Vorrichtung nach einem der Ansprüche 1 bis 11, **dadurch gekennzeichnet, dass** eine mit dem Greiferantriebssystem (11) nicht gekoppelte Vorrichtung, beispielsweise ein pneumatisch betätigbarer Zylinder (37), den zum Greiferantriebssystem (11) gehörenden Antrieb betätigt.

13. Vorrichtung nach einem der Ansprüche 1 bis 12, **dadurch gekennzeichnet, dass** das Höhenverstellungssystem einen weiteren Antrieb, beispielsweise eine Zahnrad-Riemen-Anordnung, aufweist, welcher mittels eines Elektromotors (15) betätigbar und mit der Basisplatte (17) gekoppelt ist.

## Claims

1. Device for the production of core assemblies comprising a bead core (45) and an upright or curved apex (43) for pneumatic vehicle tyres, with or without a separator (44), comprising:
- a rotatably mounted plate (3),
- at least two processing stations (5, 6, 7, 8, 9), which are arranged on the plate (3) and can be aligned with various process units by incrementally turning the plate (3),
- each processing station (5, 6, 7, 8, 9) having a base plate (17) and a gripping device (26) for centring the bead core (45) and the apex (43) and also, if applicable, the separator (44),
- a base ring (23) being fixable on the base plate (17), base rings (23) of different diameters being fixable,
- each processing station (5, 6, 7, 8, 9) having a gripper drive system (11) for actuating the gripping device (26),
**characterized**
- **in that** each processing station (5, 6, 7, 8, 9) has a height adjusting system for the vertical adjustment of the base plate (17) with respect to the plate (3).

2. Device according to Claim 1, **characterized in that** at least five processing stations (5, 6, 7, 8, 9) are provided, arranged on the plate (3) and structurally identical to one another.

3. Device according to Claim 1 or 2, **characterized in that** it has a fine positioning system (10) for fixing the plate (3) in the processing positions.

4. Device according to Claim 3, **characterized in that** the fine positioning system (10) has at least one extendable and retractable latching element (16).

5. Device according to one of Claims 1 to 4, **characterized in that** the gripper drive system (11) assigned to each processing station (5, 6, 7, 8, 9) is positioned on the underside or the upper side of the plate (3).

6. Device according to one of Claims 1 to 5, **characterized in that** the gripping device (26) provided at each processing station (5, 6, 7, 8, 9) has at least three gripping fingers (27), which are arranged within the base ring (23) and can be moved towards one another and away from one another by means of the gripper drive system (11).

7. Device according to Claim 6, **characterized in that** each gripping finger (27) has a resilient element, for example a finger sleeve (40), and a finger core (41) located within the resilient element and coupled to the gripper drive system (11).

8. Device according to Claim 7, **characterized in that** the finger core (41) has a core head (41a), which protrudes from the resilient element in the vertical direction and the diameter (d_{A,KK}) of which is greater than the diameter (d_{A,FK}) of the rest of the finger core (41).

9. Device according to one of Claims 1 to 8, **characterized in that** the gripper drive system (11) actuates all of the gripping fingers (27) of a processing station (5, 6, 7, 8, 9) simultaneously.

10. Device according to one of Claims 1 to 9, **characterized in that** the gripper drive system (11) is coupled to a mechanically operating resilient restoring element (39).

11. Device according to one of Claims 1 to 10, **characterized in that** the gripping fingers (27) of a processing station (5, 6, 7, 8, 9) are synchronously adjustable by means of a drive which belongs to the gripper drive system (11) and has for example a gearwheel-belt arrangement, a gearwheel-toothed rack arrangement or the like.

12. Device according to one of Claims 1 to 11, **characterized in that** a device not coupled to the gripper drive system (11), for example a pneumatically actuable cylinder (37), actuates the drive belonging to the gripper drive system (11).

13. Device according to one of Claims 1 to 12, **characterized in that** the height adjusting system has a further drive, for example a gearwheel-belt arrangement, which can be actuated by means of an electric motor (15) and is coupled to the base plate (17).

## Revendications

1. Dispositif de production de paquets de noyaux composés d'un noyau de talon (45) et d'un sommet dressé ou courbe (43) pour des pneumatiques de véhicule, avec ou sans séparateur (44), comprenant:
- un plateau monté de façon rotative (3),
- au moins deux stations de travail (5, 6, 7, 8, 9) disposées sur le plateau (3), qui peuvent être alignées avec différentes unités de traitement par une rotation pas à pas du plateau (3),
- dans lequel chaque station de travail (5, 6, 7, 8, 9) présente une plaque de base (17) et un dispositif de saisie (26) pour le centrage du noyau de talon (45) et du sommet (43) ainsi qu'éventuellement du séparateur (44),
- dans lequel un anneau de base (23) peut être fixé sur la plaque de base (17), dans lequel des anneaux de base (23) de différents diamètres peuvent être fixés,
- dans lequel chaque station de travail (5, 6, 7, 8, 9) présente un système d'entraînement de pince (11) pour l'actionnement du dispositif de saisie (26), **caractérisé en ce que**
- chaque station de travail (5, 6, 7, 8, 9) présente un système de réglage de hauteur pour le déplacement vertical de la plaque de base (17) par rapport au plateau (3).

2. Dispositif selon la revendication 1, **caractérisé en ce qu'**il est prévu au moins cinq stations de travail (5, 6, 7, 8, 9) de construction identique l'une à l'autre disposées sur le plateau (3).

3. Dispositif selon la revendication 1 ou 2, **caractérisé en ce qu'**il présente un système de positionnement fin (10) pour la fixation du plateau (3) dans les positions de travail.

4. Dispositif selon la revendication 3, **caractérisé en ce que** le système de positionnement fin (10) présente au moins un élément d'encliquetage (16) pouvant être engagé et dégagé.

5. Dispositif selon l'une quelconque des revendications 1 à 4, **caractérisé en ce que** le système d'entraînement de pince (11) associé à chaque station de travail (5, 6, 7, 8, 9) est positionné sur le côté inférieur et/ou le côté supérieur du plateau (3).

6. Dispositif selon l'une quelconque des revendications 1 à 5, **caractérisé en ce que** le dispositif de saisie (26) prévu à chaque station de travail (5, 6, 7, 8, 9) présente au moins trois doigts de saisie (27) disposés à l'intérieur de l'anneau de base (23), qui peuvent être déplacés l'un vers l'autre et inversement au moyen du système d'entraînement de pince (11).

7. Dispositif selon la revendication 6, **caractérisé en ce que** chaque doigt de saisie (27) présente un élément élastique, par exemple une douille de doigt (40), et un noyau de doigt (41) se trouvant à l'intérieur de l'élément élastique et couplé au système d'entraînement de pince (11).

8. Dispositif selon la revendication 7, **caractérisé en ce que** le noyau de doigt (41) présente une tête de noyau (41a) sortant hors de l'élément élastique en direction verticale, dont le diamètre (d_{A,KK}) est plus grand que le diamètre (d_{A,FK}) du reste du noyau de doigt (41).

9. Dispositif selon l'une quelconque des revendications 1 à 8, **caractérisé en ce que** le système d'entraînement de pince (11) actionne simultanément tous les doigts de saisie (27) d'une station de travail (5, 6, 7, 8, 9).

10. Dispositif selon l'une quelconque des revendications 1 à 9, **caractérisé en ce que** le système d'entraînement de pince (11) est couplé à un élément de rappel élastique (39) opérant mécaniquement.

11. Dispositif selon l'une quelconque des revendications 1 à 10, **caractérisé en ce que** les doigts de saisie (27) d'une station de travail (5, 6, 7, 8, 9) peuvent être déplacés de façon synchrone au moyen d'un entraînement faisant partie du système d'entraînement de pince (11), qui présente par exemple un agencement à roue dentée-courroie, un agencement à roue dentée-crémaillère ou analogue.

12. Dispositif selon l'une quelconque des revendications 1 à 11, **caractérisé en ce qu'**un dispositif non couplé au système d'entraînement de pince (11), par exemple un cylindre à actionnement pneumatique (37), actionne l'entraînement faisant partie du système d'entraînement de pince (11).

13. Dispositif selon l'une quelconque des revendications 1 à 12, **caractérisé en ce que** le système de réglage de hauteur présente un autre entraînement, par exemple un agencement à roue dentée-courroie, qui peut être actionné au moyen d'un moteur électrique (15) et qui est couplé à la plaque de base (17).
